# EUROPEAN PATENT SPECIFICATION

(11) **EP 2 533 350 B1**
(45) Date of publication and mention of the grant of the patent: **06.05.2020**
(21) Application number: 12162301.1
(22) Date of filing: 29.03.2012
(51) Int. Cl.: H01M 10/625, H01M 10/6555, H01M 10/613

(54) **Battery module with improved heat exchange efficiency**
Batteriemodul mit verbessertem Wärmeaustausch
Module de batterie avec efficacité d'échange de chaleur améliorée

(30) Priority: 10.06.2011 US 201161495660 P; 27.12.2011 US 201113337729
(43) Date of publication of application: 12.12.2012
(73) Proprietor: Samsung SDI Co., Ltd., Gyeonggi-do (KR); Robert Bosch GmbH, 70442 Stuttgart (DE)
(72) Inventor: Jin, Hee-Joon, Gyeonggi-do (KR)
(74) Representative: Mounteney, Simon James

(56) References cited:
- JP-A- 2007 280 858
- US-A- 5 756 227
- US-A1- 2006 049 799

## Description

### BACKGROUND OF THE INVENTION

### 1. Field of the Invention

The present invention relates to a battery module, and more particularly, to a battery module including a plurality of battery cells and barriers interposed between the battery cells.

### 2. Description of the Related Art

Recently, a high-output battery module using a nonaqueous electrolyte solution having high-energy density has been developed and the high-output battery module includes a plurality of battery cells connected to each other in series to configure a large-capacity battery module so as to be used to drive a high-power-required equipment, for example, a motor of an electric vehicle and the like.

Inside each battery cell, an electrochemical reaction occurs and as a result, gas may be generated by a side reaction. The gas may change the appearance of the battery cell and accordingly, the form of the battery module is influenced, thereby preventing the battery cells from being stably fixed. In addition, heat is often generated and so the cells require cooling.

It is known to provide barriers between the battery cells to provide strength and stability to the module. However, such barriers can have a negative effect upon the costing characteristics of the module.

JP 2009 277471 and JP 2007 280858 each disclose a battery module having barriers between adjacent cells, which include interlocking or mating faces such that adjacent barriers seal against each other.

US 2006/049799 discloses a battery pack having spacers between adjoining battery modules to provide a cooling passage.

US 5 756 227 discloses a battery pack having heat exchange planar members sandwiched between unit batteries.

### SUMMARY OF THE INVENTION

In order to solve the problem described above, an object of the present invention is to provide a battery module having improved heat exchange efficiency.

Further, another object of the present invention provides a battery module capable of preventing changes in the position of the battery cells by stably fixing the battery cell.

Accordingly, the invention provides a battery module as set out in Claim 1. Preferred features of the invention are set out in Claims 2 to 15.

According to the present invention, a battery module can have improved heat exchange efficiency, thereby improving the lifespan thereof.

Further, according to the present invention described above, a battery module can have improved physical stability.

### BRIEF DESCRIPTION OF THE DRAWINGS

FIG. 1 is a perspective view of a battery module according to an embodiment of the present invention.
FIG. 2A is a perspective view of a barrier interposed between battery cells according to an embodiment of the present invention.
FIG. 2B is a perspective view of a barrier according to an embodiment of the present invention.
FIG. 3 is a perspective view of a battery module according to another embodiment of the present invention.
FIG. 4A is a perspective view of a barrier according to another embodiment of the present invention.
FIG. 4B is a cross sectional view taken along line B-B of FIG. 4A.
FIG. 5 is a cross sectional view taken along line A-A of FIG. 3.

### DETAILED DESCRIPTION

Advantages and characteristics of the present invention, and methods for achieving them will be apparent with reference to embodiments described below in addition to the accompanying drawings. However, the present invention is not limited to the embodiments disclosed below, but may be implemented in various different forms.

In the following description, when it is described that an element is "coupled" to another element, the element may be "directly coupled" to the other element or "electrically coupled" to the other element through a third element. In order to elucidate the present invention, parts that are not related to the description will be omitted. Like reference numerals designate like elements throughout the specification.

Hereinafter, the present invention will be described with reference to the accompanying drawings.

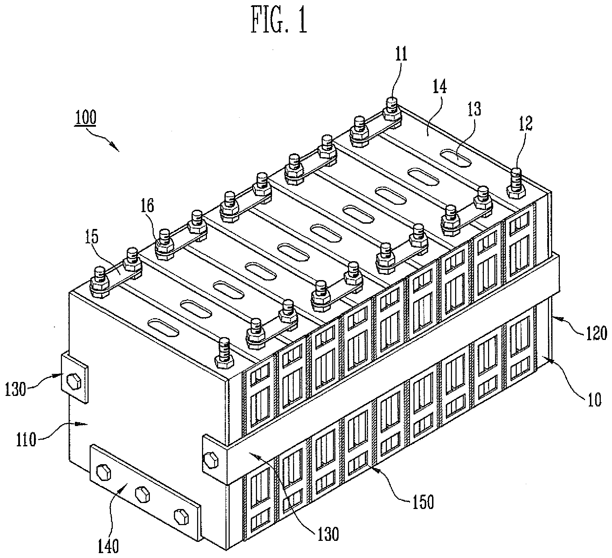

FIG. 1 is a perspective view of a battery module according to an embodiment of the present invention.

The battery module 100 includes a plurality of battery cells 10 arranged in one direction; barriers 150 interposed between the battery cells 10; and housings 110, 120, 130, and 140 accommodating the battery cells 10 and the barriers 150. Each barrier 150 includes a base part 153 disposed to be parallel to the battery cells 10 and flange parts 151 and 152 contacting adjacent battery cells 10 in upper and lower portions on both sides of the base part 153. The base part 153 is made of a first material, and a part of each of the flange parts 151 and 152 is made of a second material different from the first material.

Each battery cell 10 may be manufactured by sealing a battery case with a cap assembly 14 after an electrode assembly and an electrolyte are stored in the battery case. Each cap assembly 14 includes a positive terminal 11 and a negative terminal 12 disposed at respective ends of the cap assembly 14 and a vent 13. Each electrode assembly is connected via its with the positive terminal 11 and negative terminal 12 and the terminals act as conductor of energy generated by electrochemical reaction between the electrode assembly and the electrolyte. Further, the vent 13 acts as an outlet for discharging gas generated in the battery cell 10 to the outside.

The housings 110, 120, 130, and 140 bundle the plurality of battery cells 10 and the barriers 150 interposed between the battery cells 10 together. The housings 110, 120, 130, and 140 include a pair of first and second end plates 110 and 120 disposed at the outside of the battery cells 10 and connection members 130 and 140 connecting the first and second end plates 110 and 120 to each other.

The first and second end plates 110 and 120 and the connection members 130 and 140 partition a predetermined space in order to accommodate the plurality of battery cells 10 and the battery cells 10 are arranged in one direction in the partitioned space. In this embodiment, the battery cells 10 are arranged in parallel, so that their major surfaces face each other. The positive terminals 11 or the negative terminals 12 of each two adjacent battery cells 10 are electrically connected to each other through a bus-bar 15. Each bus-bar 15 includes holes through which the positive terminal 11 and the negative terminal 12 of adjacent cells 10 pass. The bus-bar 15 in which the positive terminal 11 and the negative terminal 12 are connected by passing through the hole are fixed with nuts 16 or the like.

The connection members 130 and 140 include a pair of side plates 130 and a bottom plate 140. The side plates 130 serve to support both sides of the battery cells 10 and the bottom plate 140 serves to support the bottoms of the battery cells 10. First ends of the side plates 130 and one end of the bottom plate 140 are fastened to a first end plate 110 and opposite ends thereof are fastened to a second end plate 120 in order to connect the first and the second end plates 110 and 120. In this case, the fastening is performed by a bolt-nut and the like, but the invention is not limited thereto.

The first and the second end plates 110 and 120, the side plates 130 and the bottom plate 140 act to stably fix the plurality of battery cells 10 and the barriers 150, but they are not limited to the form of this embodiment and may be variously modified. Further, the connection structure of the battery cells 10 and the number of the battery cells 10 may be variously modified according to a design of the battery module 100.

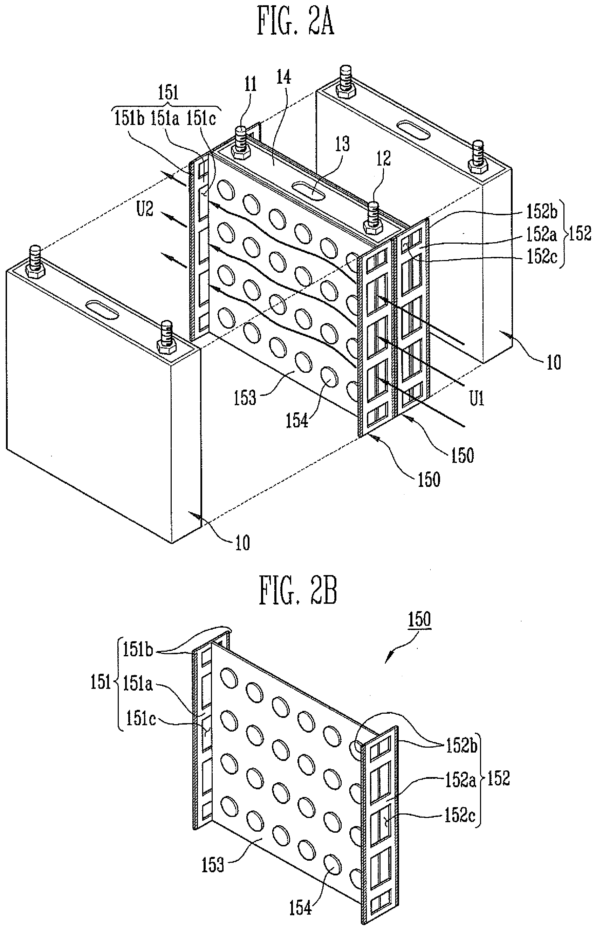

FIG. 2A is a perspective view of a barrier interposed between battery cells according to this embodiment of the present invention and FIG. 2B is a perspective view of the barrier.

Referring to FIGS. 2A and 2B, the barrier 150 includes an intermediate part in the form of a base part 153 configured to be parallel to the battery cell 10 and flange parts 151 and 152 adapted to contact the battery cell 10 located on each side of the base part 153. The barrier 150 is made predominently of a first material, and a first part of each of the flange parts 151 and 152 is made of a second material different from the first material.

The base part 153 substantially has a size corresponding to the wide front surface of the battery cell 10. A plurality of projections 154 are disposed on the base part 153. The projections serve to contact the adjacent battery cells 10. The base part 153 is adapted to be interposed between the adjacent battery cells 10 and spaced apart from the battery cell 10 by a predetermined amount by the projections 154. The projections therefore serve to provide a moving passage for a heat exchange medium.

The flange parts 151 and 152 include first and second side flange parts 151 and 152 contacting the sides of the battery cells located on each side of the base part 153. The first and second side flange parts 151 and 152 are perpendicular to the base part 153. In this case, the base part 153 is connected to the centers of the first and second side flange parts 151 and 152 to define a T-shaped cross-section in the region of the connection. For example, the first or the second side flange part 151 or 152 may include a tetragonal flat plate facing the side of the battery cell.

Further, the first and second side flange parts each include openings 151c and 152c. The openings 151c and 152c include a plurality of holes spaced apart from each other in a longitudinal direction of the respective side flange part 151 or 152.

The flange parts 151 and 152 of the barrier 150 are formed from the first material and a second part of edges of the flange parts 151 and 152 is made of the second material. Further, the barriers 150 are provided so that the flange parts 151 and 152 of adjacent barriers 150 contact each other.

The first and second flange parts 151 and 152 include first portions 151a and 152a made of the first material and second portions 151b and 152b made of the second material and provided around edges of both sides of the first portions 151a and 152a. For example, the first material may include at least one or more of stainless steel, aluminum, plastic and the second material may include an elastic member such as rubber and the like.

Heat may be generated by repetitive charge and discharge in the battery cells, and the heat accelerates the deterioration of the battery cells and can cause serious problems such as ignition or explosion of the battery cells.

Due to the barriers 150 of this embodiment, space is provided between the battery cells 10 and the space may act as passages U1 to U2 for a heat exchange medium capable of controlling the heat generated in the battery cells 10. That is, the heat exchange medium flows in through the openings 152c of the second side flange part 152 and flows out through the openings 151c of the first side flange part 151 to exchange the heat by directly addressing the wide surface of the battery cells 10. The second part of the flange parts 151 and 152 act as baffles to constrain the heat exchange medium to the passages. Accordingly, the temperature of the battery cells can be efficiently controlled and the use lifespan of the battery module 100 can be lengthened.

In general, the barrier of the battery module provides the moving passage of the heat exchange medium by separating the battery cells and in addition, can improve the fastening property of the battery module by fixing the plurality of battery cells.

In the barriers 150, the second portions 151b and 152b of the flange parts 151 and 152 are in contact with each other and thus, the flange parts 151 and 152 of the adjacent barriers 150 are close to each other in the sides of the battery cells 10, and the heat exchange medium can flow in or out efficiently through the openings 151c and 152c.

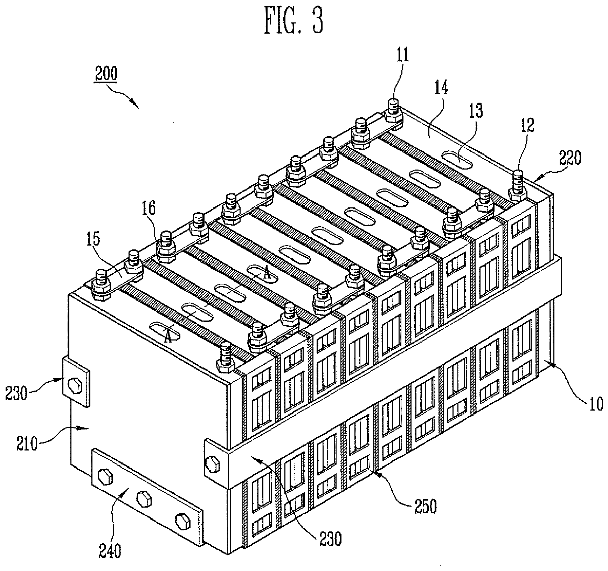

Hereinafter, another embodiment of the present invention will be described with reference to FIGS 3 to 5. This embodiment is similar to the embodiment described in FIGS. 1 to 2B, except for contents described below.

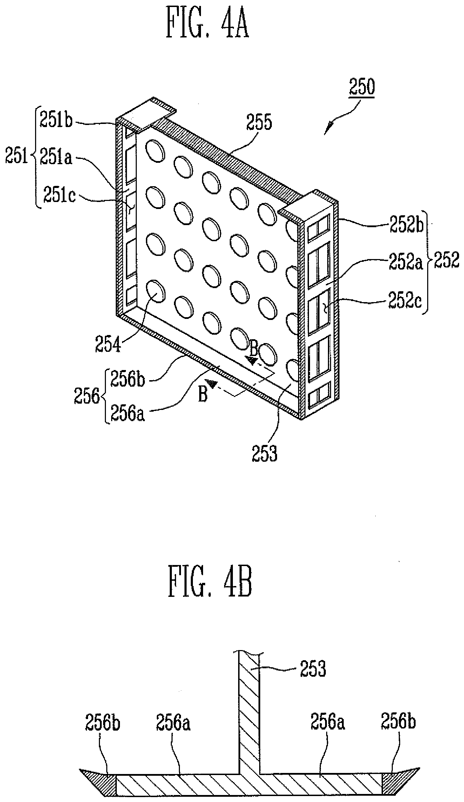

FIG. 3 is a perspective view of a battery module according to this embodiment of the present invention, FIG. 4A is a perspective view of a barrier according to this embodiment of the present invention, and FIG. 4B is a cross sectional view taken along line B-B of FIG. 4A.

Referring to FIGS. 3 to 4B, the battery module 200 according to this embodiment includes a plurality of battery cells 10 arranged in one direction; barriers 250 interposed between the battery cells 10; and housings 210, 220, 230, and 240 accommodating the battery cells 10 and the barriers 250. Each barrier 250 includes a base part 253 disposed to be parallel to the battery cells 10 and including projections 254 and flange parts 251, 252, 253, and 254 contacting adjacent battery cells 10 in upper and lower portions of both sides of the base part 253.

Each barrier 250 may be made predominently of at least one or more of stainless steel, aluminum and plastic. The flange parts of the barrier 250 may be made of an elastic member such as rubber and the like.

The flange parts 251, 252, 253, and 254 include first and second side flange parts 251 and 252 provided at the both sides of the base part 253 and an upper flange part 255 and a lower flange part 256 respectively separately connected to an upper portion and a lower portion of the first and second side flange parts 251 and 252.

The upper flange part 255 connects the first and second side flange parts 251 and 252 and contacts the upper side of the adjacent battery cells 10. On a cap assembly 14 of the battery cells 10, positive and negative terminals 11 and 12 and a vent 14 are provided and exposed to the outside thereof. In addition, in the battery module 200, since the upper flange part 254 is nearly not influenced on the load of the battery cell due to a structural characteristic thereof, an additional member for supporting the upper side is not required at the upper side of the battery cells 10. Accordingly, the upper flange part 255 may be made of an elastic member such as rubber and the like and may be made of only the elastic member. The upper flange part 255 is in close contact with the cap assembly 14 of the battery cells 10, thereby acting as a outlet and preventing a leakage of the heat exchange medium at the upper side of the battery module 200.

The lower flange part 256 connects the first and second side flange parts 251 and 252 and corresponds to the bottom of the battery cells 10. The lower flange part 256 extends by the same width as the first and second side flange parts 251 and 252.

The first portion 256a of the lower flange part 256 may be made of at least any one of hard stainless steel, aluminum and plastic. The second portion 256b located at edge regions of both sides of the first portion 256a may be made of an elastic member such as rubber and the like.

In the lower flange part 256, the second portions 256b of the lower flange parts 256 of the adjacent barriers 250 are in contact with each other, thereby preventing a leakage of the heat exchange medium at the lower side of the battery module 200.

Referring to FIGS. 4A and 4B, the edges of the flange parts 251, 252, 253, and 254 have a substantially triangular cross-section which is gradually tapered toward an edge region thereof. In the case of the flange parts 251, 252, 253, and 254 including the first and second portions, the second portion has a generally triangular shape of cross-section. In this embodiment, the second portions of each of the flange parts 251, 252, 253, and 254 are formed so as to be inclined toward the battery cell side.

The second portions 256b of the lower flange part 256 may be made of an elastic member and the like, thereby improving compactibility as compared with the first portion. Accordingly, the lower flange part 256 is connected with base part 253 in the center the first portion 256a to support the bottom of the battery cells 10. The shape of the second portion 256b is not limited to the lower flange part 256 and may be applied to the first and second side flange parts 251 and 252 and the upper flange part 255.

Heat exchange efficiency between the battery cells 10 can be improved due to the elastic member provided in the flange parts 251, 252, 253, and 254 of the barriers 250 and the shape of the edges of the flange parts 251, 252, 253, and 254, thereby extending a useful lifespan of the battery module 200 and reducing the cost of the battery module 200.

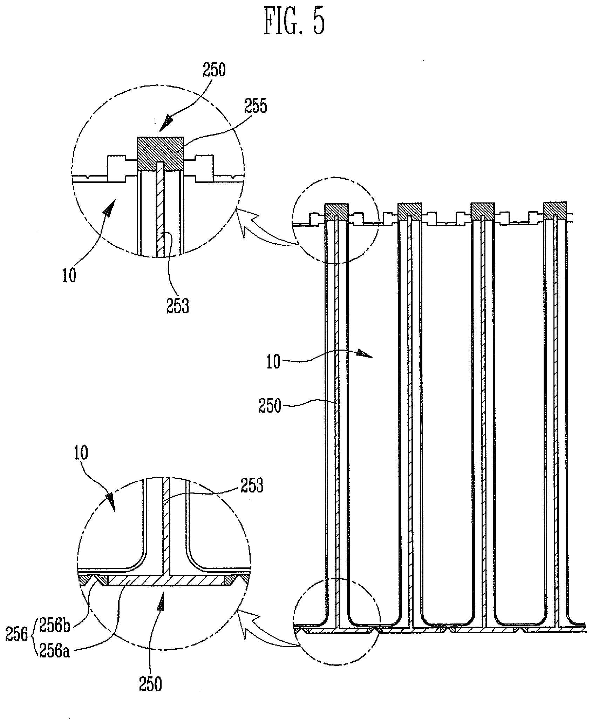

FIG. 5 is a cross sectional view taken along line A-A of FIG. 3.

Referring to FIG. 5, in the battery module 200 including the barriers 250 according to this embodiment, the upper flange part 255 made of an elastic member is in close contact with the upper sides of the battery cells 10. Further, the lower flange part 256 is provided at the lower side of the battery cells and the lower flange part 256 is in close contact with the bottoms of the battery cells 10.

As described above, the heat exchange medium may flow into or out from the battery module 200 through the openings 251a and 252b of the first and second flange parts 251 and 252. Therefore, unnecessary waste of the heat exchange medium used for cooling and heating the battery cell 10 can be reduced and heat exchange efficiency of the battery cell 10 can be improved.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A battery module, comprising:
a plurality of battery cells (10) arranged consecutively in a first direction; and
a first barrier (150);
wherein the first barrier (150) comprises a first intermediate part (153) situated between a first said battery cell and a second said battery cell, and a first flange part (151) comprising a first flange portion (151a);
the first flange portion (151a) extends over a surface portion of the first battery cell and extends over a surface portion of the second battery cell;
**characterised in that** a first baffle part (151b) is provided on the edges of the first flange portion (151a) that extend over the surface portions of the first battery cell and second battery cell and makes contact with the said surface portions of the first battery cell and the second battery cell,
wherein the first baffle part (151b) comprises a flexible material and/or an elastomeric material.

2. A battery module according to claim 1, wherein the first flange portion comprises a flange body (151a) upon which the first baffle part (151b) is located.

3. A battery module according to claim 2, wherein each flange body (151a) comprises one or more of stainless steel, aluminium and a plastic material.

4. A battery module according to any preceding claim, wherein the first flange part (151) comprises at least one opening (151c) for allowing a cooling medium to access a space between the first intermediate part (153) and at least one of the first battery cell and the second battery cell.

5. A battery module according to claim 4, wherein the said opening (151c) communicates with a first space between the barrier (150) and the first battery cell and a second space between the barrier (150) and the second battery cell.

6. A battery module according to one of claims 4 to 5, wherein the first barrier (150) comprises a spacer formation (154) for spacing at least one of the first battery cell and the second battery cell from the first intermediate part (153), so as to provide a flow path for a cooling medium between the first intermediate part (153) and the or each said battery cell.

7. A battery module, according to any preceding claim, wherein the first flange part (151) is located on a lateral surface of the battery module.

8. A battery module according to claim 7, wherein the first barrier (150) comprises a second flange part (152) on an opposite lateral surface of the battery module to the first flange part (151).

9. A battery module according to claim 8, wherein the second flange part (152) comprises a further first flange portion (152a);
the further first flange portion (152a) extends over a surface portion of the first battery cell and extends over a surface portion of the second battery cell, wherein a second baffle part (152b) is provided on each of the edges of the further first flange portion (152a) that extend over the surface portions of the first battery cell and the second battery cell and makes contact with the said surface portions of the first battery cell and second battery cell,
wherein the second baffle part (152b) comprises a flexible material and/or an elastomeric material.

10. A battery module according to claim 7, 8 or 9, wherein the first barrier (150) further comprises a lower flange part (256) located on a bottom surface of the battery module and extending generally perpendicularly to the first flange part (151) and comprising a third flange portion (256a), wherein a third baffle part (256b) is provided on each of the edges of the third flange portion (256a).

11. A battery module according to any preceding claim, wherein at least one of the baffle parts (151b, 152b, 256b) has a cross-section that tapers towards a distal edge thereof.

12. A battery module according to one of claims 7 to 10, wherein the first barrier (150) further comprises an upper flange part (255) located on a top surface of the battery module and extending generally perpendicularly to the first flange part (151).

13. A battery module according to any preceding claim, wherein the first and second flange portions (151a, 152a) extend away from each other in a direction substantially perpendicular to a plane dividing the first battery cell from the second battery cell.

14. A battery module according to any preceding claim, comprising a second barrier;
wherein the second barrier comprises a second intermediate part situated between the first said battery cell and a third said battery cell, and a third flange part comprising a further first flange portion;
the further first flange portion extends over a surface portion of the first battery cell and extends over a surface portion of the third battery cell, wherein a fourth baffle part is provided on the edges of the further first flange portion that extend over the surface portions of the first battery cell and the third battery cell and makes contact with the said surface portions of the first battery cell and third battery cell.

15. A battery cell according to claim 13, wherein the fourth baffle part contacts the first or second baffle parts (151b, 152b) in the said surface portion of the first battery cell.

## Patentansprüche

1. Batteriemodul, umfassend:
eine Vielzahl von Batteriezellen (10), die nacheinander in einer ersten Richtung angeordnet sind; und
eine erste Trennwand (150);
wobei die erste Trennwand (150) ein erstes Zwischenteil (153), das sich zwischen einer ersten Batteriezelle und einer zweiten Batteriezelle befindet, und ein erstes Flanschteil (151) umfasst, das einen ersten Flanschabschnitt (151a) umfasst;
wobei sich der erste Flanschabschnitt (151a) über einen Oberflächenabschnitt der ersten Batteriezelle erstreckt und sich über einen Oberflächenabschnitt der zweiten Batteriezelle erstreckt;
**dadurch gekennzeichnet, dass** ein erstes Prallblechteil (151b) an den Kanten des ersten Flanschabschnitts (151a) vorgesehen ist, das sich über die Oberflächenabschnitte der ersten Batteriezelle und der zweiten Batteriezelle erstreckt und mit den Oberflächenabschnitten der ersten Batteriezelle und der zweiten Batteriezelle einen Kontakt herstellt,
wobei das erste Prallblechteil (151b) ein flexibles Material und/oder ein elastomeres Material umfasst.

2. Batteriemodul nach Anspruch 1, wobei der erste Flanschabschnitt einen Flanschkörper (151a) umfasst, auf dem sich das erste Prallblechteil (151b) befindet.

3. Batteriemodul nach Anspruch 2, wobei jeder Flanschkörper (151a) einen oder mehrere aus Edelstahl, Aluminium und einem Kunststoffmaterial umfasst.

4. Batteriemodul nach einem vorhergehenden Anspruch, wobei das erste Flanschteil (151) mindestens eine Öffnung (151c) umfasst, um einem Kühlmedium den Zugang zu einem Raum zwischen dem ersten Zwischenteil (153) und mindestens entweder der ersten Batteriezellen oder der zweiten Batteriezelle zu ermöglichen.

5. Batteriemodul nach Anspruch 4, wobei die Öffnung (151c) mit einem ersten Raum zwischen der Trennwand (150) und der ersten Batteriezelle und einem zweiten Raum zwischen der Trennwand (150) und der zweiten Batteriezelle verbunden ist.

6. Batteriemodul nach einem der Ansprüche 4 bis 5, wobei die erste Trennwand (150) eine Abstandshalteranordnung (154) zum Abstandshalten mindestens entweder der ersten Batteriezelle oder der zweiten Batteriezelle vom ersten Zwischenteil (153) umfasst, um so einen Strömungsweg für ein Kühlmedium zwischen dem ersten Zwischenteil (153) und der oder jeder der Batteriezellen bereitzustellen.

7. Batteriemodul nach einem vorhergehenden Anspruch, wobei sich das erste Flanschteil (151) auf einer Seitenfläche des Batteriemoduls befindet.

8. Batteriemodul nach Anspruch 7, wobei die erste Trennwand (150) ein zweites Flanschteil (152) auf einer gegenüberliegenden Seitenfläche des Batteriemoduls zum ersten Flanschteil (151) umfasst.

9. Batteriemodul nach Anspruch 8, wobei das zweite Flanschteil (152) einen weiteren ersten Flanschabschnitt (152a) umfasst;
wobei sich der weitere erste Flanschabschnitt (152a) über einen Oberflächenabschnitt der ersten Batteriezelle erstreckt und sich über einen Oberflächenabschnitt der zweiten Batteriezelle erstreckt, wobei ein zweiter Prallblechabschnitt (152b) an jedem der Ränder des weiteren ersten Flanschabschnitts (152a) bereitgestellt wird, der sich über die Oberflächenabschnitte der ersten Batteriezelle und der zweiten Batteriezelle erstreckt und mit den Oberflächenabschnitten der ersten Batteriezelle und der zweiten Batteriezelle einen Kontakt herstellt,
wobei der zweite Prallblechabschnitt (152b) ein flexibles Material und/oder ein elastomeres Material umfasst.

10. Batteriemodul nach Anspruch 7, 8 oder 9, wobei die erste Trennwand (150) ferner ein unteres Flanschteil (256) umfasst, das auf einer Bodenfläche des Batteriemoduls angeordnet ist und sich im Allgemeinen senkrecht zum ersten Flanschteil (151) erstreckt und einen dritten Flanschabschnitt (256a) umfasst, wobei ein drittes Prallblechteil (256b) an jeder der Kanten des dritten Flanschabschnitts (256a) bereitgestellt wird.

11. Batteriemodul nach einem vorhergehenden Anspruch, wobei mindestens eines der Prallblechabschnitte (151b, 152b, 256b) einen Querschnitt aufweist, der sich zu einer distalen Kante hin verjüngt.

12. Batteriemodul nach einem der Ansprüche 7 bis 10, wobei die erste Trennwand (150) ferner ein oberes Flanschteil (255) umfasst, das sich auf einer Oberseite des Batteriemoduls befindet und sich im Allgemeinen senkrecht zu dem ersten Flanschteil (151) erstreckt.

13. Batteriemodul nach einem vorhergehenden Anspruch, wobei sich der erste und der zweite Flanschabschnitt (151a, 152a) voneinander weg in einer Richtung erstrecken, die im Wesentlichen senkrecht zu einer Ebene verläuft, die die erste Batteriezelle von der zweiten Batteriezelle trennt.

14. Batteriemodul nach einem vorhergehenden Anspruch, umfassend eine zweite Trennwand;
wobei die zweite Trennwand ein zweites Zwischenteil, das sich zwischen der ersten Batteriezelle und einer dritten Batteriezelle befindet, und ein drittes Flanschteil umfasst, das einen weiteren ersten Flanschabschnitt umfasst;
wobei der weitere erste Flanschabschnitt sich über einen Oberflächenabschnitt der ersten Batteriezelle erstreckt und sich über einen Oberflächenabschnitt der dritten Batteriezelle erstreckt, wobei ein vierter Prallblechabschnitt an den Kanten des weiteren ersten Flanschabschnitts vorgesehen ist, der sich über die Oberflächenabschnitte der ersten Batteriezelle und der dritten Batteriezelle erstreckt und mit den Oberflächenabschnitten der ersten Batteriezelle und der dritten Batteriezelle einen Kontakt herstellt.

15. Batteriezelle nach Anspruch 13, wobei das vierte Prallblechteil die ersten oder zweiten Prallblechabschnitte (151b, 152b) in dem Oberflächenabschnitt der ersten Batteriezelle kontaktiert.

## Revendications

1. Module de batterie, comprenant :
une pluralité d'éléments de batterie (10) agencés consécutivement dans une première direction ; et
une première barrière (150) ;
dans lequel la première barrière (150) comprend une première partie intermédiaire (153) située entre un premier desdits éléments de batterie et un deuxième desdits éléments de batterie, et une première partie de bride (151) comprenant une première partie de bride (151a) ;
la première partie de bride (151a) s'étend sur une partie de surface du premier élément de batterie et s'étend sur une partie de surface du deuxième élément de batterie ;
**caractérisé en ce qu'**une première partie de déflecteur (151b) est ménagée sur les bords de la première partie de bride (151a) qui s'étendent sur les parties de surface du premier élément de batterie et du deuxième élément de batterie et entre en contact avec lesdites parties de surface du premier élément de batterie et du deuxième élément de batterie,
dans lequel la première partie de déflecteur (151b) comprend un matériau flexible et/ou un matériau élastomère.

2. Module de batterie selon la revendication 1, dans lequel la première partie de bride comprend un corps de bride (151a) sur lequel la première partie de déflecteur (151b) est située.

3. Module de batterie selon la revendication 2, dans lequel chaque corps de bride (151a) comprend un ou plusieurs élément(s) parmi l'acier inoxydable, l'aluminium et une matière plastique.

4. Module de batterie selon l'une quelconque des revendications précédentes, dans lequel la première partie de bride (151) comprend au moins une ouverture (151c) afin de permettre à un agent de refroidissement d'accéder à un espace entre la première partie intermédiaire (153) et au moins un du premier élément de batterie et du deuxième élément de batterie.

5. Module de batterie selon la revendication 4, dans lequel ladite ouverture (151c) communique avec un premier espace entre la barrière (150) et le premier élément de batterie et un second espace entre la barrière (150) et le deuxième élément de batterie.

6. Module de batterie selon l'une quelconque des revendications 4 à 5, dans lequel la première barrière (150) comprend une formation d'entretoise (154) permettant d'espacer au moins un du premier élément de batterie et du deuxième élément de batterie de la première partie intermédiaire (153), afin de fournir un chemin d'écoulement pour un milieu de refroidissement entre la première partie intermédiaire (153) et le ou chacun desdits éléments de batterie.

7. Module de batterie, selon l'une quelconque des revendications précédentes, dans lequel la première partie de bride (151) est située sur une surface latérale du module de batterie.

8. Module de batterie selon la revendication 7, dans lequel la première barrière (150) comprend une deuxième partie de bride (152) sur une surface latérale opposée du module de batterie à la première partie de bride (151).

9. Module de batterie selon la revendication 8, dans lequel la deuxième partie de bride (152) comprend une autre première partie de bride (152a) ;
l'autre première partie de bride (152a) s'étend sur une partie de surface du premier élément de batterie et s'étend sur une partie de surface du deuxième élément de batterie, dans lequel une deuxième partie de déflecteur (152b) est ménagée sur chacun des bords de l'autre première partie de bride (152a) qui s'étendent sur les parties de surface du premier élément de batterie et du deuxième élément de batterie et entrent en contact avec lesdites parties de surface du premier élément de batterie et du deuxième élément de batterie,
dans lequel la deuxième partie de déflecteur (152b) comprend un matériau flexible et/ou un matériau élastomère.

10. Module de batterie selon la revendication 7, 8 ou 9, dans lequel la première barrière (150) comprend en outre une partie de bride inférieure (256) située sur une surface inférieure du module de batterie et s'étendant généralement de manière perpendiculaire à la première partie de bride (151) et comprenant une troisième partie de bride (256a), dans lequel une troisième partie de déflecteur (256b) est ménagée sur chacun des bords de la troisième partie de bride (256a).

11. Module de batterie selon l'une quelconque des revendications précédentes, dans lequel au moins une des parties de déflecteur (151b, 152b, 256b) présente une section transversale qui se rétrécit vers un bord distal correspondant.

12. Module de batterie selon l'une quelconque des revendications 7 à 10, dans lequel la première barrière (150) comprend en outre une partie de bride supérieure (255) située sur une surface supérieure du module de batterie et s'étendant généralement de manière perpendiculaire à la première partie de bride (151).

13. Module de batterie selon l'une quelconque des revendications précédentes, dans lequel la première et la deuxième partie de bride (151a, 152a) s'étendent en éloignement l'une de l'autre dans une direction sensiblement perpendiculaire à un plan divisant le premier élément de batterie du deuxième élément de batterie.

14. Module de batterie selon l'une quelconque des revendications précédentes, comprenant une seconde barrière ;
dans lequel la seconde barrière comprend une seconde partie intermédiaire située entre ledit premier élément de batterie et un troisième élément de batterie, et une troisième partie de bride comprenant une autre première partie de bride ;
l'autre première partie de bride s'étend sur une partie de surface du premier élément de batterie et s'étend sur une partie de surface du troisième élément de batterie, dans lequel une quatrième partie de déflecteur est ménagée sur les bords de l'autre première partie de bride qui s'étendent sur les parties de surface du premier élément de batterie et du troisième élément de batterie et entre en contact avec lesdites parties de surface du premier élément de batterie et du troisième élément de batterie.

15. Élément de batterie selon la revendication 13, dans lequel la quatrième partie de déflecteur entre en contact avec la première ou la deuxième partie de déflecteurs (151b, 152b) dans ladite partie de surface du premier élément de batterie.
